# EUROPEAN PATENT APPLICATION

(11) **EP 1 930 292 A1**
(43) Date of publication of application: **11.06.2008**
(21) Application number: 07121707.9
(22) Date of filing: 28.11.2007
(51) Int. Cl.: C01B 3/16

(54) **Process and apparatus for production of hydrogen using the water gas shift reaction**

(30) Priority: 05.12.2006 US 633992
(71) Applicant: Air Products and Chemicals, Inc., Allentown, PA 18195-1501 (US)
(72) Inventor: Garg, Diwakar, Emmaus, PA 18049 (US); Fogash, Kevin Boyle, Wescosville, PA 18106 (US)
(74) Representative: Schwabe - Sandmair - Marx

(57) **Abstract**

A process and a reactor vessel for production of hydrogen via the water gas shift reaction at CO/CO₂ ratios above 1.9, and steam to gas rations below 0.5, are disclosed, The process includes first reacting a feed gas mixture of carbon monoxide and steam in the presence of a precious metal catalyst on a structural support, yielding a resultant gas, and then reacting the resultant gas in the presence of a non-precious metal catalyst on a support medium. The reactor vessel includes a chamber having an inlet duct and an outlet. A structural support having the precious metal catalyst is positioned upstream of the non-precious metal catalyst positioned within the chamber. The structural support may be positioned within the inlet duct or within the chamber. The support medium may be a granular medium or a structural support.

## Description

### BAGKGROUND OF THE INVENTION

This invention relates to a process and an apparatus for the production of a product gas comprising hydrogen using precious metal and non-precious metal catalysts in the water gas shift reaction.

Hydrogen may be produced from carbon monoxide and steam via the water gas shift reaction: CO + H₂O → CO₂ + H₂ where the carbon monoxide and steam are reacted at elevated temperatures in the presence of a metal catalyst. The water gas shift reaction may be used to advantage in conjunction with other hydrogen production techniques to recover additional hydrogen using the reaction products of those techniques. For example, the output from the steam reforming of methane, CH₄ + H₂O → CO + 3H₂ produces carbon monoxide and hydrogen. The carbon monoxide, when further reacted with steam in the water gas shift reaction produces carbon dioxide and hydrogen. Likewise, synthesis gas, produced by reforming hydrocarbons with steam, or by partial oxidation of hydrocarbons, and containing carbon monoxide and hydrogen, can be reacted further along with steam in a water gas shift reactor to increase the production of hydrogen.

The water gas shift reaction is mildly exothermic in nature, i,e., heat is liberated during the reaction. The heat liberated during the reaction needs to be removed from the reactor during the reaction. Because it is difficult to remove heat from the shift reactor, two different approaches have been used by the industry. In the first approach, feed gas is introduced into the reactor at substantially lower temperature than the temperature of the product gas. In the second approach, multiple reactors are used wherein heat is removed form the product of the first reactor by using a heat exchanger The cooled product is introduced into the second reactor for further reaction. The first approach is commonly used by the industry because it is economical.

Two different catalysts are commonly used for the water gas shift reaction - a more expensive copper based catalyst and a less expensive iron-chromium based catalyst. The iron-chromium based catalyst can be promoted with low amounts of copper to enhance catalyst activity. There are no restrictions in terms of gas composition when using a copper based catalyst for the water gas shift reaction. However, there are a number of operational limitations when using a copper based catalyst for the water gas shift reaction First, the catalyst needs to be pre-reduced with hydrogen to be effective for the water gas shift reaction. This means that a separate source of hydrogen needs to be provided to pre-reduce the catalyst prior to using it for the water gas shift reaction. Second, the operating temperature needs to be limited to a maximum of about 280°C to avoid loss in catalytic activity due to sintering of the copper catalyst. Consequently, the use of copper based catalyst is limited to situations where iron-chromium based catalyst cannot be used.

Iran-chromium or copper promoted iron-chromium (also known as iron-chromium-copper) catalyst is widely used by the industry for the water gas shift reaction. It requires a slightly higher operating temperature (ranging from about 280°C to about 450°C) for the water gas shift reaction. Since it requires a higher operating temperature than the copper based catalyst, it is commonly termed as a high temperature shift (HTS) catalyst. The water gas shift reaction carried at higher temperatures with an HTS catalyst is called an HTS reaction, and the HTS reaction is commonly used by the industry for the water gas shift reaction.

Iron-chromium or iron-chromium-copper catalyst is used in an oxide form, and therefore does not require reduction with hydrogen prior to its use for the water gas shift reaction. In fact, it is desirable to avoid reduction of the iron-chromium-copper based catalyst because both iron-chromium and iron-chromium-copper catalysts in reduced form are very active for the methanation reaction (the reaction consumes hydrogen instead of producing it and concomitantly produces undesirable hydrocarbons such as methane). Consequently, when the water gas shift reaction occurs in the presence of a non-precious metal catalyst like iron-chromium or iron-chromium-copper catalysts two process parameters have a controlling effect on the reaction, as described in U.S. Patent No. 6,500,403. These parameters are the ratio of carbon monoxide to carbon dioxide (CO/CO₂) and the ratio of steam to other gases. If the CO/CO₂ ratio is greater than 1.9, and/or, if the ratio of steam to other gases is less than 0.5, then the reaction that occurs will be reversed from the water gas shift reaction and hydrocarbons will be formed rather than hydrogen. The reverse reaction is believed to occur due to the reduction of the iron-chromium or iron-chromium-copper based catalysts, caused by the presence of either high concentrations of carbon monoxide (high CO/CO₂ ratios) or low concentrations of steam (low steam to other gases ratios). Consequently, the use of non-precious metal catalysts like iron-chromium or iron-chromium-copper based catalysts is limited to treating water gas shift feed gas mixtures containing CO/CO₂ ratios less than 1.9 and/or steam to other gas ratios more than 0.5.

There exists a need for a process and an apparatus for economically generating hydrogen using the high temperature water gas shift reaction at a CO/CO₂ ratio greater than 1.9 and/or a steam to other gas ratio less than 0.5 without promoting the formation of hydrocarbons.

### BRIEF SUMMARY OF THE INVENTION

The invention concerns a process for producing a product gas comprising hydrogen. The process comprises:
(a) providing a first catalyst comprising a precious metal on a structural support, and a second catalyst comprising a non-precious metal on a support medium;
(b) maintaining the first and second catalysts at a temperature between about 280°C and about 450°C;
(c) reacting a feed gas mixture comprising carbon monoxide and steam in the presence of the first catalyst, thereby producing a resultant gas mixture, and then reacting the resultant gas mixture in the presence of the second catalyst to produce a product gas comprising carbon dioxide and hydrogen.

The feed gas mixture may be produced by reforming hydrocarbons with steam or partial oxidation of hydrocarbons. In such cases the feed gas mixture will comprise hydrogen.

The feed gas mixture may further comprise carbon dioxide and unreacted hydrocarbon in the form of methane, and the volumetric ratio of carbon monoxide to carbon dioxide in the mixture may be greater than about 1.9. Furthermore, the volumetric ratio of steam to other gases in the mixture may be less than about 0.5.

The precious metal catalyst may be platinum, rhodium, palladium, ruthenium, gold, iridium and combinations thereof. The non-precious metal catalyst may be iron-chromium, iron-chromium-copper and combinations thereof.

The invention also includes a reactor vessel for producing a product gas comprising carbon dioxide and hydrogen from a feed gas stream comprising carbon monoxide, hydrogen and steam. The feed gas may also contain low levels of carbon dioxide and methane. The reactor vessel comprises a chamber having an inlet duct for receiving the feed gas stream and an outlet for discharging the product gas. A support medium is position within the chamber. A non-precious metal catalyst is positioned on the support medium. A structural support is positioned in the feed gas stream upstream of the support medium. A precious metal catalyst is positioned on the structural support.

The structural support may comprise a plurality of plates arranged within the inlet duct so as to permit flow of the gas mixture over the plates and into the chamber, the precious metal catalyst being supported on the plates. Alternately, the structural support may comprise a plurality of plates arranged within the chamber so as to permit flow of the gas mixture over the plates and then through the support medium, the precious metal catalyst being supported on the plates.

Preferably, the precious metal catalyst is present on the plates at an area density between about 0.015 mg per square inch and about 15 mg per square inch.

In one embodiment of a reactor, the support medium comprises a granular medium formed of or supporting the non-precious metal catalyst. The granular material may be made by compressing iron-chromium, iron-chromium-copper or other non-precious metal catalyst powder into pellets. Alternatively, the granular material may be made of ceramic pellets and the concentration of iron-chromium, iron-chromium-copper or other non-precious metal catalyst on the ceramic material may vary between about 5% to about 50% by weight of the ceramic pellets. In another embodiment, the support medium comprises a plurality of plates arranged within the chamber so as to permit flow of the gas mixture thorough over the plates and through the chamber, the non-precious metal catalyst being supported on the plates.

Preferably, the non-precious metal catalyst is present on the plates at an area density between about 0.075 mg per square inch and about 75 mg per square inch.

### BRIEF DESCRIPTION OF SEVERAL VIEWS OF THE DRAWINGS

Figure 1 is a sectional view of an embodiment of a vessel for producing hydrogen according to the invention;

Figure 1A shows a portion of the vessel within circle A in Figure 1 on an enlarged scale;

Figure 1B shows a portion of the vessel within circle 1 B in Figure 1 on an enlarged scale;

Figure 2 is a sectional view of another embodiment of a vessel for producing hydrogen according to the invention;

Figure 3 is a sectional view of another embodiment of a vessel for producing hydrogen according to the invention;

Figure 4 is a sectional view of another embodiment of a vessel for producing hydrogen according to the invention; and

Figure 4A shows a portion of the vessel within circle 4A in Figure 4 on an enlarged scale.

### DETAILED DESCRIPTION OF THE INVENTION

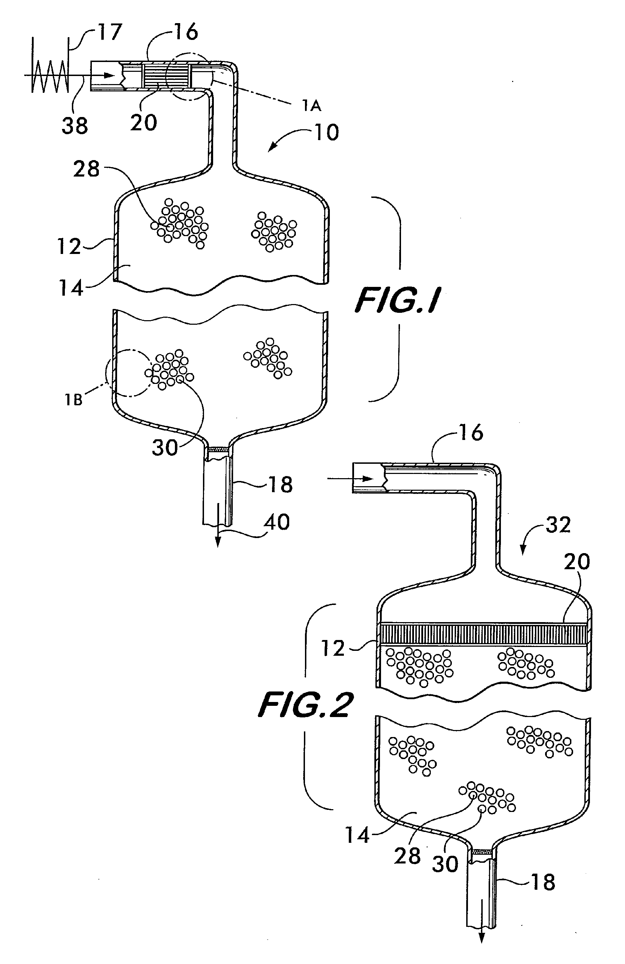

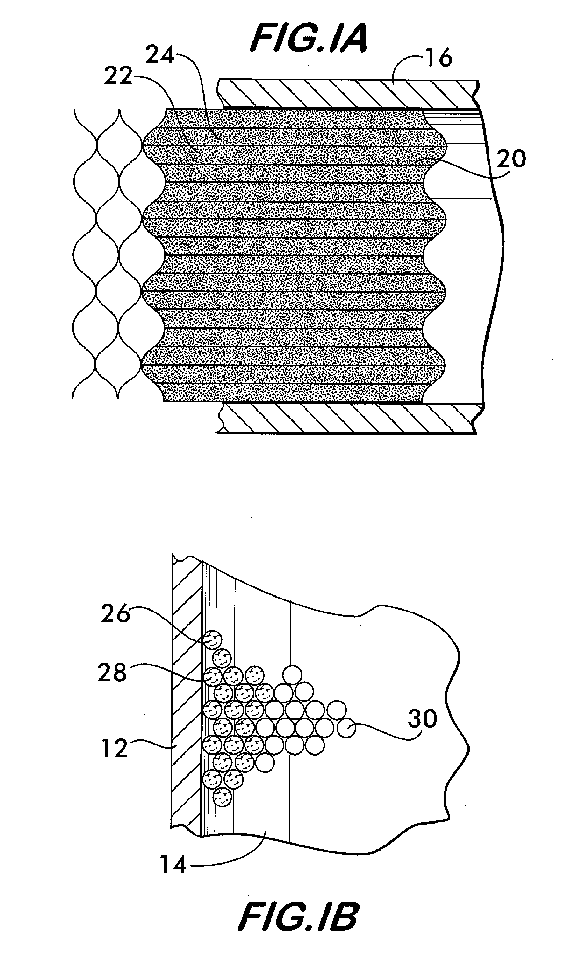

Figure 1 shows a reactor vessel 10 for producing hydrogen via the water gas shift reaction CO + H₂O → CO₂ + H₂. Reactor vessel 10 comprises a shell 12 that defines a chamber 14. For the practical production of hydrogen on an industrial scale, the shell may be formed of stainless steel and define a chamber between about 15 feet and about 20 feet in diameter and about 15 feet to about 20 feet long. Reactor vessel 10 has an inlet duct 16 for receiving the gaseous reactants for the shift reaction, and an outlet 18 for discharging the resultant product gas from the chamber.

In the embodiment illustrated in Figure 1, a structural support 20 is positioned within the inlet duct 16. As shown in Figure 1A, the structural support 20 comprises a plurality of plates 22 which carry a precious metal catalyst 24. As shown with reference to Figures 1 and 1B, downstream of the precious metal catalyst, a non-precious metal catalyst 26 is supported on a support medium 28 positioned within the chamber 14.

Reactor vessels according to the invention configured so as to present a precious metal catalyst on a structural support upstream of a non-precious metal catalyst on a support medium are expected to have greater efficiency and economy than reactors according to the prior art. Due to its higher catalytic activity, the precious metal catalyst may be used in the water gas shift reaction at CO/CO₂ ratios higher than 1.9 and/or steam to gas ratios less than 0.5 without forming undesired hydrocarbons. The precious metal catalyst is also used to bring the CO/CO₂ ratio into the proper range (less than 1.9) so that the shift reaction will proceed as desired when reacted in the presence of the non-precious metal catalyst positioned downstream within the chamber of the reactor,

The precious metal catalyst volume may vary from about 5% to 50% of the non-precious metal catalyst volume, preferably from about 5% to about 35%, and more preferably from about 5% to about 25%. The overall conversion of carbon monoxide in the precious metal catalyst volume may vary from about 5% to about 30%, preferably from about 5% to about 25%, more preferably from about 5% to about 20% depending upon the concentration of carbon monoxide or ratio of CO/CO₂ in the feed gas. In any case, the ratio of CO/CO₂ entering the non-precious metal catalyst volume is limited to less than 1.9.

Various types of structural supports 20 are feasible for use with reactor vessels according to the invention. The example shown in Figure 1 illustrates structured materials of the type marketed by Sulzer Chemtech Ltd. of Winterthur, Switzerland. These structural supports comprise a plurality of plates configured so as to present a large surface area, and allow gas flow at low resistance (or low pressure drop) through the vessel. The particular configuration of such structural support means varies, but includes materials having corrugations oriented angularly or parallel to the direction of gas flow, cross corrugated materials having flat plates alternating with corrugated plates as well as radial flow and cordal flow arrangements. These structural support means provide an effective support for the precious metal catalyst.

The plates of such structural support means may be formed of high temperature iron-chromium-aluminum metal alloys such as fecralloy or ceramics such as zirconia, alumina, calcium aluminate, magnesium aluminate, magnesium aluminum silicate, titania, alumina silicate, berylia, thoria, lanthania, calcium oxide, magnesia as well as mixtures of these compounds. Other examples of structural support means include static mixing elements, honeycomb monolith structures as well as other configurations having longitudinal passageways. Such structural support means for the precious metal catalyst provide high gas flow rates with low pressure drop. The gas hourly space velocity through such materials may range between 5,000 per hour to about 50,000 per hour.

The resistance to fouling and large surface area provided by structural supports permits smaller amounts of precious metal to be used than would otherwise be present on a granular support medium. Area densities of the precious metal on the surface of the structural support may vary between about 0.015 mg per square inch to about 15 mg per square inch Thus, the structural support makes the use of precious metal economically feasible. The precious metal catalyst positioned on the structural support may include platinum, rhodium, palladium, ruthenium, gold, iridium and combinations thereof.

The structural support made of a ceramic material may be deposited with the catalyst by any of various techniques including impregnation, adsorption, ion exchange, precipitation, co-precipitation, spraying, dip-coating, brush painting as well as other methods.

The structural support made of metal alloy may be deposited first with a ceramic washcoat. The ceramic washcoat may be selected from ceramics such as zirconia, alumina, calcium aluminate, magnesium aluminate, magnesium aluminium silicate, titania, alumina silicate, berylia, thoria, lanthania, calcium oxide, magnesia as well as mixtures of these compounds. The washcoat my be deposited with deposition and/or precipitation methods including sol-gel methods, slurry dip-coating, spray coating, brush painting as well as other methods. The washcoat may then be deposited with the catalyst by any of various techniques including impregnation, adsorption, ion exchange, precipitation, co-precipitation, spraying, dip-coating, brush painting as well as other methods.

In preparing the structural support by washcoating, a ceramic paste or washcoat is deposited on the surface of the structural support. The washcoat is then deposited or impregnated with one or more precious metals. The area density of washcoat may vary between about 15 mg per square inch and about 150 mg per square inch. The amount of precious metal may vary between about 0.1 % to about 10% by weight of the washcoat. The amount of non-precious metal may vary between about 5% to about 50% by weight of the washcoat.

The non-precious metal catalyst 26 positioned on the support medium 28 shown in Figures 1 and 1B may be iron-chromium, iron-chromium-copper and combinations thereof. The support medium may comprise a granular medium 30 as shown in Figure 1B. The granular medium may comprise powdered iron-chromium or iron-chromium-copper compressed into pellets. Alternately, ceramic pellets made from zirconia, alumina, calcium aluminate, magnesium aluminate, magnesium aluminum silicate, titania, alumina silicate, zirconia stabilized alpha alumina, partially stabilized zirconia as well as combinations of these compounds may be coated with the non-precious metal catalyst. The concentration of non-precious metal catalyst on ceramic pellets may vary between about 5% to about 50% by weight of the ceramic pellets.

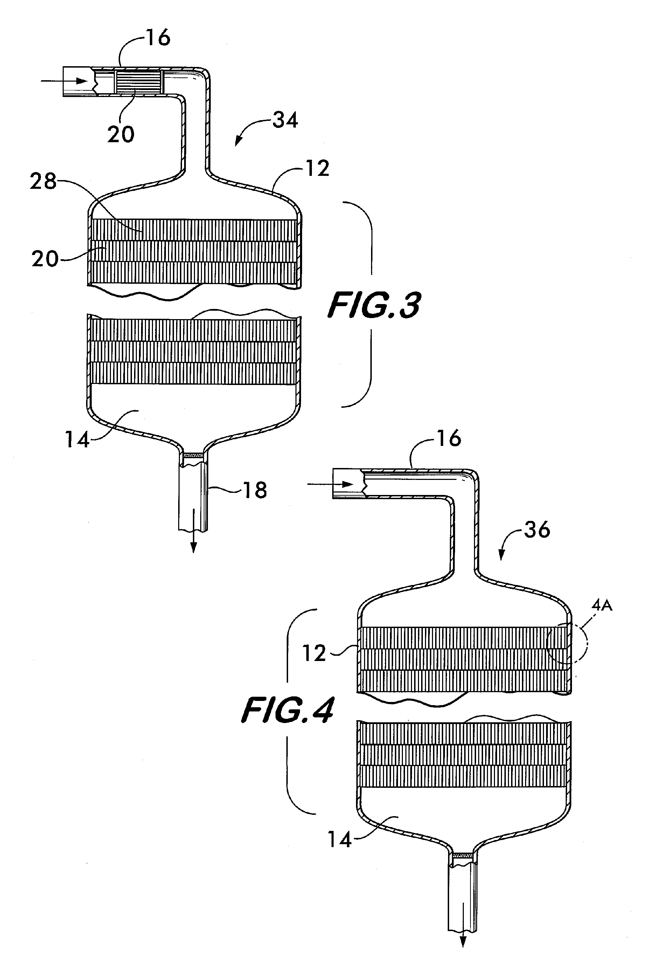

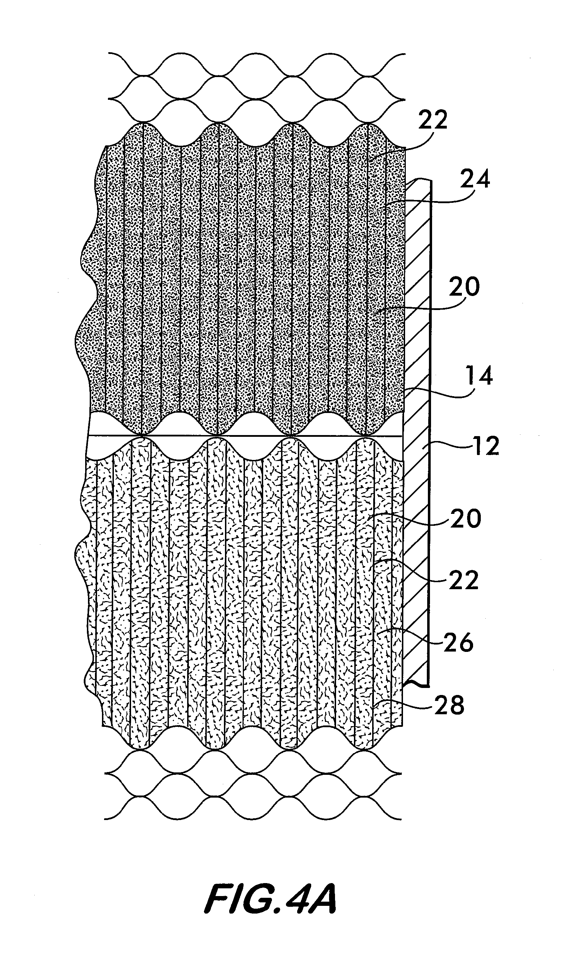

In another embodiment of a reactor vessel 32, shown in Figure 2, the structural support 20 carrying the precious metal catalyst is positioned within the chamber 14 upstream of the support medium 28, which comprises a granular medium 30, such as pellets made by compressing iron-chromium or iron-chromium-copper powder, or ceramic pellets coated with the non-precious metal catalyst. Figure 3 illustrates another reactor vessel embodiment 34, wherein the precious metal catalyst is supported on a structural support 20 positioned within the inlet duct 16 of the vessel, and the support medium 28 within the chamber 14 also comprises a structural support 20, coated with the non-precious metal catalyst. Figures 4 and 4A show yet another embodiment of a reactor vessel 36 wherein both the precious metal and non-precious metal catalysts 24 and 26 are positioned within the chamber 14. Both catalysts are supported on separate structural supports 20, i.e., the support medium 28 also comprises a structural as opposed to a granular support means. Although Sulzer type materials comprising plates are shown for the structural support means in the various figures, it is understood that this is by way of example only and the structural support means may comprise any of the designs as described above.

In all of the various embodiments described, the precious metal catalyst volume may vary from about 5% to 50% of the non-precious metal catalyst volume, preferably from about 5% to about 35%, and more preferably from about 5% to about 25%. The overall conversion of carbon monoxide in the precious metal catalyst volume may vary from about 5% to about 30%, preferably from about 5% to about 25%, more preferably from about 5% to about 20% depending upon the concentration of carbon monoxide or ratio of CO/CO₂ in the feed gas. For all the embodiments, the ratio of CO/CO₂ entering the non-precious metal catalyst volume is limited to less than 1.9.

The invention also encompasses a process for producing a product gas comprising hydrogen using the water gas shift reaction: CO + H₂O → CO₂ + H₂. As illustrated in Figure 1, a feed gas mixture 38, comprising carbon monoxide and steam, enters the inlet duct 16 of the reactor vessel 10. If, for example, the feed gas mixture is derived from a steam methane reforming reaction, it will also comprise hydrogen. The feed gas mixture will also comprise hydrogen if it is derived from the partial oxidation of hydrocarbons. The feed gas mixture may also comprise carbon dioxide and methane.

The feed gas mixture first encounters the structural support 20 supporting the precious metal catalyst 24 (see also Figure 1A) which is maintained at a temperature between about 280°C and about 450°C. This may be accomplished, for example, by passing the feed gas mixture through a heat exchanger 17, which may be used to add or remove heat from the feed gas mixture as necessary to maintain the desired operating temperature for the reactions.

The feed gas mixture reacts in the presence of the precious metal catalyst thereby producing a resultant gas mixture comprising carbon monoxide, carbon dioxide, hydrogen, steam and unconverted methane. The CO/CO₂ ratio of the resultant gas mixture is less than 1.9. By first passing the feed gas mixture through the precious metal catalyst, the CO/CO₂ ratio of the feed gas mixture is brought within the proper limits so that the water gas shift reaction will continue as the resultant gas mixture passes through the support medium 28 which supports the non-precious metal catalyst. Having these parameters within the proper range ensures that hydrocarbons will not be produced, as would occur in the presence of the non-precious metal catalyst if the CO/CO₂ ratio of the feed gas were greater than 1.9 and/or the steam to gas ratio were less than 0.5. The non-precious metal catalyst is also maintained at a temperature between about 280°C and about 450°C through the heat exchanger 17 or other heat exchangers, not shown. A product gas 40 exits the chamber through outlet 18, the product gas comprising the products of the water shift reaction, namely, carbon dioxide and hydrogen.

It is expected that the various reactor embodiments according to the invention will efficiently and economically handle feed gas mixtures with CO/CO₂ ratios as high as 2.5 without promoting the formation of undesired hydrocarbons in a reversal of the intended reaction.

## Claims

1. A process for producing a product gas comprising hydrogen, said process comprising:
providing a first catalyst comprising a precious metal on a structural support, and a second catalyst comprising a non-precious metal on a support medium;
maintaining said first and second catalysts at a temperature between about 280°C and about 450°C;
reacting a feed gas mixture comprising carbon monoxide and steam in the presence of said first catalyst, thereby producing a resultant gas mixture; and
reacting said resultant gas mixture in the presence of said second catalyst to produce said product gas comprising carbon dioxide and hydrogen.

2. A process according to Claim 1, wherein said feed gas mixture further comprises carbon dioxide, the volumetric ratio of carbon monoxide to carbon dioxide in said mixture being greater than about 1.9.

3. A process according to Claim 2, wherein the concentration of carbon monoxide to carbon dioxide is such that about 5% to about 30% of the carbon monoxide in said feed gas is converted with said first catalyst.

4. A process according to Claim 2, wherein the concentration of carbon monoxide to carbon dioxide is such that about 5% to about 25% of the carbon monoxide in said feed gas is converted with said first catalyst.

5. A process according to Claim 2, wherein the concentration of carbon monoxide to carbon dioxide is such that about 5% to about 20% of the carbon monoxide in said feed gas is converted with said first catalyst.

6. A process according to Claim 2, wherein said feed gas mixture further comprises methane.

7. A process according to Claim 1, wherein the volumetric ratio of said steam to other said gases in said feed gas mixture is less than about 0.5.

8. A process according to Claim 1, wherein said precious metal is selected from the group consisting of platinum, rhodium, palladium, ruthenium, gold, iridium and combinations thereof.

9. A process according to Claim 1, wherein said non-precious metal is selected from the group consisting of iron-chromium, iron-chromium-copper and combinations thereof.

10. A process according to Claim 1, wherein said feed gas mixture is produced by reforming hydrocarbons with steam, said feed gas mixture containing hydrogen.

11. A process according to Claim 1, wherein said feed gas mixture is produced by partial oxidation of hydrocarbons, said feed gas mixture containing hydrogen.

12. A reactor vessel for producing a product gas comprising carbon dioxide and hydrogen from a feed gas stream comprising carbon monoxide and steam, said reactor vessel comprising:
a chamber having an inlet duct for receiving said feed gas stream and an outlet for discharging said product gas;
a support medium positioned within said chamber;
a non-precious metal catalyst positioned on said support medium;
a structural support positioned in said feed gas stream upstream of said support medium;
a precious metal catalyst positioned on said structural support.

13. A reactor vessel according to Claim 12, wherein said structural support comprises a plurality of plates arranged within said inlet duct so as to permit flow of said gas mixture over said plates and into said chamber, said precious metal catalyst being supported on said plates.

14. A reactor vessel according to Claim 13, wherein said precious metal catalyst is present on said plates at an area density between about 0.015 mg per square inch and about 15 mg per square inch.

15. A reactor vessel according to Claim 12, wherein said structural support comprises a plurality of plates arranged within said chamber so as to permit flow of said gas mixture over said plates and through said support medium, said precious metal catalyst being supported on said plates.

16. A reactor vessel according to Claim 15, wherein said precious metal catalyst is present on said plates at an area density between about 0015 mg per square inch and about 15 mg per square inch.

17. A reactor vessel according to Claim 12, wherein said support medium comprises a granular medium carrying said non-precious metal catalyst.

18. A reactor vessel according to Claim 17, wherein said granular medium comprises pellets made of compressed non-precious metal catalyst powder.

19. A reactor vessel according to Claim 17, wherein said granular medium comprises a ceramic selected from the group consisting of zirconia, alumina, magnesium aluminum silicate, titania, alumina silicate, zirconia stabilized alpha alumina, partially stabilized zirconia and combinations thereof.

20. A reactor vessel according to Claim 19, wherein said non-precious metal catalyst comprises between about 5% to about 50% of the weight of said ceramic.

21. A reactor vessel according to Claim 12, wherein said support medium comprises a plurality of plates arranged within said chamber so as to permit flow of said gas mixture over said plates and through said chamber, said non-precious metal catalyst being supported on said plates.

22. A reactor vessel according to Claim 21, wherein said non-precious metal catalyst is present on said plates at an area density between about 0.075 mg per square inch and about 75 mg per square inch

23. A reactor vessel according to Claim 12, wherein said precious metal catalyst is selected from the group consisting of platinum, rhodium, palladium, ruthenium, gold, iridium and combinations thereof.

24. A reactor vessel according to Claim 12, wherein said non-precious metal catalyst is selected from the group consisting of iron-chromium, iron-chromium-copper and combinations thereof.

25. A reactor vessel according to Claim 12, wherein said precious metal catalyst has a volume of between about 5% to about 50% of said non-precious metal catalyst.

26. A reactor vessel according to Claim 12, wherein said precious metal catalyst has a volume of between about 5% to about 35% of said non-precious metal catalyst.

27. A reactor vessel according to Claim 12, wherein said precious metal catalyst has a volume of between about 5% to about 25% of said non-precious metal catalyst.

28. A reactor vessel for producing a product gas comprising carbon dioxide and hydrogen from a feed gas stream comprising carbon monoxide and steam, said reactor vessel comprising:
a chamber having an inlet duct for receiving said feed gas stream and an outlet for discharging said product gas;
a support medium positioned within said chamber;
a non-precious metal catalyst positioned on said support medium;
a structural support means positioned in said feed gas stream upstream of said support medium;
a precious metal catalyst positioned on said structural support means.

29. A reactor vessel according to Claim 28, wherein said structural support means comprises a plurality of plates arranged within said inlet duct so as to permit flow of said gas mixture over said plates and into said chamber, said precious metal catalyst being supported on said plates.

30. A reactor vessel according to Claim 28, wherein said structural support means comprises a plurality of plates arranged within chamber so as to permit flow of said gas mixture over said plates and through said support medium, said precious metal catalyst being supported on said plates.

31. A reactor vessel according to Claim 28, wherein said support medium comprises a granular medium carrying said non-precious metal catalyst.

32. A reactor vessel according to Claim 31, wherein said granular medium comprises pellets made of compressed non-precious metal catalyst powder

33. A reactor vessel according to Claim 28, wherein said support medium comprises a structural support means.

34. A reactor vessel according to Claim 33, wherein said structural support means comprises a plurality of plates arranged within chamber so as to permit flow of said gas mixture over said plates, said non-precious metal catalyst being supported on said plates.
